# EUROPEAN PATENT APPLICATION

(11) **EP 1 251 698 A2**
(43) Date of publication of application: **23.10.2002**
(21) Application number: 02008867.0
(22) Date of filing: 19.04.2002
(51) Int. Cl.: H04N 7/173, H04N 5/00, H04N 7/24

(54) **Program distribution system**

(30) Priority: 19.04.2001 JP 2001121713; 17.09.2001 JP 2001282245
(71) Applicant: MATSUSHITA ELECTRIC INDUSTRIAL CO., LTD., Kadoma-shi, Osaka 571-8501 (JP)
(72) Inventor: Nishitani, Kazuhiro, Osaka-fu 552-0007 (JP); Sakaniwa, Katsuyuki, Hyogo-ken 665-0871 (JP); Kajimoto, Kazuo, Yokohama-shi Kanagawa-ken 226-0015 (JP); Tokuda, Hirokazu, Osaka-shi Osaka-fu 538-0035 (JP)
(74) Representative: Grünecker, Kinkeldey, Stockmair & Schwanhäusser Anwaltssozietät

(57) **Abstract**

A program distribution system stores compressed program information created by compressing a plurality of consecutive frame images. Then, after receiving segment information that indicates a specific segment of frame images to be distributed, the system produces a plurality of decompressed frame images by decompressing a section of the compressed information that corresponds to the segment of frame images indicated by the segment information. Next, the system performs inter-frame compression on the plurality of decompressed frame images, thus producing a new stream of compressed information that is then transmitted as distribution program.

## Description

This application is based on applications No. 2001-121713 and No. 2001-282245 filed in Japan, the contents of which are hereby incorporated by reference.

### BACKGROUND OF INVENTION

### (1) Field of the Invention

The present invention relates to program distribution technology for distributing program data via a distribution network.

### (2) Description of Related Art

In the field of internet-based program distribution, it is generally the case that program information is stored in a server apparatus and, in accordance with requests placed by the client apparatus, is distributed to the client apparatus by the server apparatus. In this case, program information refers to images recorded by an operator of a digital video camera or the like.

However, as mentioned above, this program information is precisely that which is recorded by a camera operator and, therefore, it can include various types of images, such as images that the operator would prefer not to share with the public, images of interest to only certain individuals, test images, etc. As a result, if such program information is distributed as is, there would not be ample protection of the camera operator's professional rights, and viewers are likely to be forced to view unnecessary images. Consequently, there is presently a demand to be able to distribute only select portions of program information.

### SUMMARY OF THE INVENTION

To meet the above demand, it is an object of the present invention to provide a program distribution system, a program distribution method, a program distribution computer program, a recording medium on which the program distribution computer program is recorded, a program distribution server apparatus, and a reproduction terminal apparatus that enable distribution of an appropriate program via a distribution network.

The present invention is a program distribution system for distributing, via a distribution network, a distribution program extracted from an original program, the program distribution system including: an original program storage unit operable to store one original program, the original program including inter-frame compressed original frame images, inter-frame compression being a method whereby each frame image is compressed, with at least one frame image being compressed using as a reference one or more neighboring frame images; a reception unit operable to receive segment information indicating a segment of the original frame images;. a decompression unit operable to decompress sections of the compressed original frame images to generate intermediate frame images that include the frame images indicated by the segment information; a re-compression unit operable to a) extract from the intermediate frame images the frame images indicated by the segment information, and b) generate re-compressed frame images by performing inter-frame compression on the extracted frame images; and a distribution unit operable to distribute, via a distribution network, the re-compressed frame images as the distribution program.

With this arrangement, the present invention is capable of decompressing data that a) includes a segment of frame image data indicated by segment information, and b) is but one part of an original set of inter-frame compressed original frame images. Once the data is decompressed, it is used to reproduce the frame images. Then, using inter-frame compression, the frame images are compressed once again for the purpose of being transmitted to the user. This makes it possible for specified program information to be distributed to the user.

Furthermore, the present invention is a program distribution system for distributing, via a distribution network, a distribution program extracted from an original program, the program distribution system including: an original program storage unit operable to store one original program, the original program including inter-frame compressed original frame images, and the inter-frame compressed original frame images including a plurality of compressed frame image groups, each made up of a prescribed number of frame images subjected to inter-frame compression, inter-frame compression being a method whereby each frame image is compressed, with at least one frame image using as a reference one or more neighboring frame images; a reception unit operable to receive segment information indicating a segment of the original frame images; a retrieval unit operable to retrieve, from the inter-frame compressed original frame images, a compressed frame image group that includes frame images indicated by the segment information; a transmission unit operable to transmit, as the distribution program, the retrieved compressed frame image group; a receiving unit operable to receive the transmitted compressed frame image group; a decompression unit operable to decompress the received compressed frame image group to produce a plurality of temporarily decompressed frame images; an extraction unit operable to extract, from the produced temporarily decompressed frame images, the frame images indicated by the segment information; and a reproduction unit operable to reproduce the extracted frame images.

With this arrangement, a compressed frame image group that includes the frame images indicated by the segment information is extracted from the inter-frame compressed original frame images. Then this extracted compressed frame image group is transmitted as a distribution program and received as a distribution program. After being received, the compressed frame image group is decompressed, forming temporarily decompressed frame images. Finally, only the frame images that correspond to those indicated by the segment information are extracted out of these temporarily decompressed frame images. This also ensures that the user reproduces only the appropriate program.

Here, the program distribution system may further include: a segment information transmission unit operable to transmit the segment information received by the reception unit; and a segment information reception unit operable to receive the transmitted segment information, wherein the extraction unit extracts decompressed frame images indicated by the segment information received by the segment information reception unit.

With this arrangement, the segment information is transmitted and then received. Then, only the frame images that correspond to those indicated by the received segment information are extracted, thus ensuring that the user's apparatus extracts only the desired program.

Here, the program distribution system may further include: a computer program storage unit operable to store a) a decompression computer program for producing a plurality of temporarily decompressed frame images by decompressing the received compressed frame image group, and b) an extraction computer program for extracting the temporarily decompressed frame images indicated by the segment information; a computer program transmission unit operable to read the decompression computer program and the extraction computer program from the computer program storage unit, and to transmit the read decompression computer program and the read extraction computer program; and a computer program reception unit operable to receive the transmitted decompression computer program and the transmitted extraction computer program, wherein the decompression unit and the extraction unit share a microprocessor that operates in accordance with the decompression computer program and the extraction computer program to c) produce a plurality of temporarily decompressed frame images by decompressing the received compressed frame image groups, and d) extract the temporarily decompressed frame images indicated by the segment information received by the segment information reception unit.

With this arrangement, a decompression computer program and an extraction computer program are received. The microprocessor operates in accordance with the computer programs to a) produce a plurality of temporarily decompressed frame images by decompressing the compressed frame image group, and b) extract the frame images that correspond to those indicated by the segment information. Therefore, the above-described processing is possible in various computer systems.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 is a block drawing showing the structure of program distribution system 1;
FIG. 2 is a block drawing showing the structure of distribution contents production subsystem 10;
FIG. 3 is an example showing the arrangement of the data that makes up the program structure;
FIG. 4 is a block drawing showing the structure of CH (contents holder) distribution subsystem 20;
FIG. 5 is a block drawing showing the structure of mobile retailer distribution subsystem 30;
FIG. 6 is a schematic drawing showing the order in which decompression and compression take place in the case of intra-frame compression;
FIG. 7 is a schematic drawing showing the order in which decompression and compression take place in the case of inter-frame compression;
FIG. 8 is a block drawing showing the structure of retailer distribution subsystem 40;
FIG. 9 is a block drawing showing the structure of mobile phone 50;
FIG. 10 is a block drawing showing the structure of PC 60;
FIG. 11 is a schematic drawing showing the order in which decompression and extraction take place in PC 60;
FIG. 12 is a flowchart showing the operations of distribution contents production subsystem 10;
FIG. 13 is a flowchart showing the operations of CH (contents holder) distribution subsystem 20;
FIG. 14 is a flowchart showing the operations of mobile retailer distribution subsystem 30 and mobile phone 50;
FIG. 15 is a flowchart showing the details of the operations involved in the program production performed by control unit 303 shown in Step S144 of FIG. 14;
FIG. 16 is a flowchart showing the operations of retailer distribution subsystem 40 and PC 60; and
FIG. 17 is a flowchart showing the details of the operations involved in the program reproduction designated by Step S206 of FIG. 16.

### DESCRIPTION OF THE PREFERRED EMBODIMENTS

The following describes a program distribution system according to a preferred embodiment of the present invention.

### 1. The Structure of Program Distribution System 1

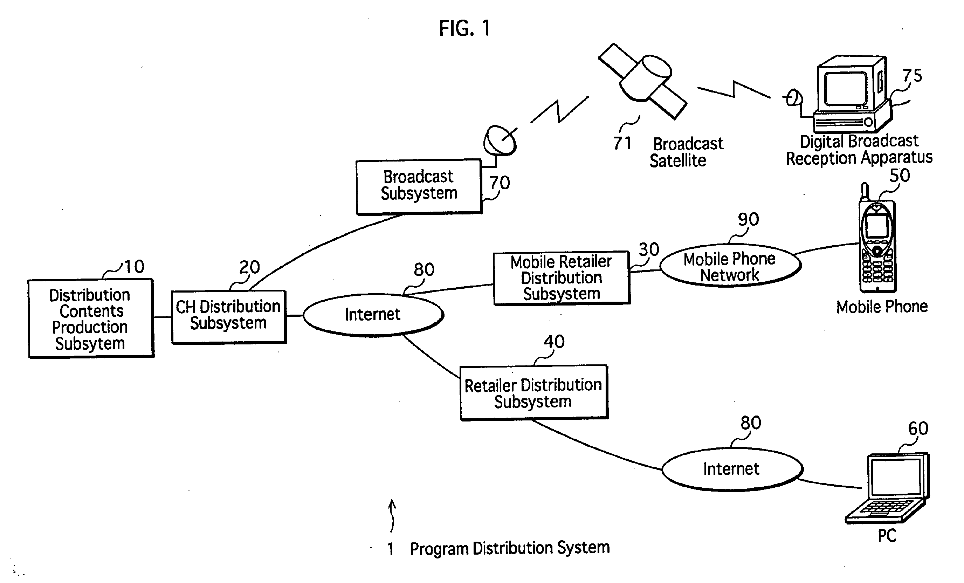

As shown in FIG. 1, the structure of program distribution sub-system 1 includes distribution contents subsystem 10, CH (contents holder) distribution subsystem 20, mobile retailer distribution subsystem 30, retailer distribution subsystem 40, broadcast subsystem 70, mobile phone 50, PC (personal computer) 60, and digital broadcast reception apparatus 75.

Distribution contents production subsystem 10 is connected to CH distribution subsystem 20 via a specialized circuit. CH distribution subsystem 20 is connected to mobile retailer distribution subsystem 30 and retailer distribution subsystem 40 via internet 80, and CH distribution subsystem 20 is further connected to broadcast subsystem 70 via a specialized circuit. Mobile retailer distribution subsystem 30 is connected to mobile phone 50 via mobile phone network 90, and retailer distribution subsystem 40 is connected to PC 60 via internet 80. Finally, broadcast subsystem 70 transmits broadcast signals, and digital broadcast reception apparatus 75 receives those broadcast signals.

The contents produced by distribution contents production subsystem 10 are sent via CH distribution subsystem 20, mobile retailer distribution subsystem 30, retailer distribution subsystem 40 and internet 80 to the corresponding mobile phone 50, PC 60, and digital broadcast reception apparatus 75.

### 1.1. The Structure of Distribution Contents Production Subsystem 10

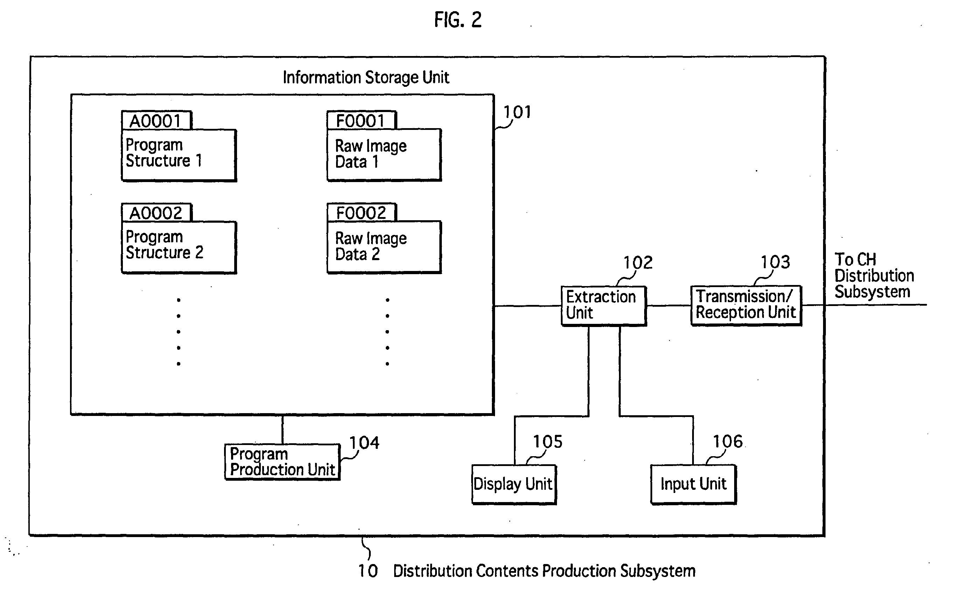

As indicated in FIG. 2, distribution contents production subsystem 10 is made up of information storage unit 101, extraction unit 102, transmission/reception unit 103, program production unit 104, display unit 105, and input unit 106.

Concretely speaking, distribution contents production subsystem 10 is a computer system comprising a microprocessor, a ROM, a RAM, a hard disk unit, a display unit, a keyboard, a mouse, an LAN connection unit. A computer program is stored on the hard disk unit, and the microprocessor operates in accordance with the computer program. Finally, distribution contents production subsystem 10 functions based on the operations of the microprocessor.

### (1) Information Storage Unit 101

Within information storage unit 101, a plurality of individual program structures and a plurality of units of raw image data are stored in advance.

### <Raw Image Data>

The units of raw image data are compressed code streams produced by compression encoding a moving image according to a certain standard, the moving image being made up of a plurality of consecutive frame images.

The units of raw image data are identified by file name.

The above-mentioned standard can be MPEG, Motion JPEG or the like. And the above-mentioned compression encoding method includes intra-frame compression and inter-frame compression (inter-frame predictive encoding). Inter-frame compression is a compression process wherein a plurality of consecutive frame images are compressed, each frame being compressed after referring to the pixels of one or more neighboring frame images. And intra-frame compression is a compression process wherein a frame image is compressed using the pixels within that very same frame. These standards and compression methods are common knowledge to those experienced in the field, so no further explanation will be provided here.

The raw image data includes data that indicates the various standards, as well as data that indicates whether the compression encoding took place via intra-frame compression or inter-frame compression.

When encoding is done using inter-frame compression, there is at least one I-picture included in the selected code string that corresponds to a prescribed number of frame images within the overall compressed code string. This selected code string that corresponds to a prescribed number of frame images is called a basic compressed frame image group. And a concrete example of a basic compressed frame image group would be a GOP (Group of Pictures).

### <Program structure>

A program is made up of a plurality of scenes, and each scene includes a plurality of frame images. Normally, this program would be called the main program. And based on this main program, the one responsible for the final product (in this case, the director) can edit and reproduce the program to make a what is called a "director's cut" edition (hereinafter referred to as the DC edition). Additionally, if one were to insert commercial messages into the main program, that would be called a CM edition.

The function of the program structure is to regulate the plurality of scenes that make up the above-mentioned program and to regulate the order in which these scenes are reproduced. The program structure is identified through the use of program identifiers.

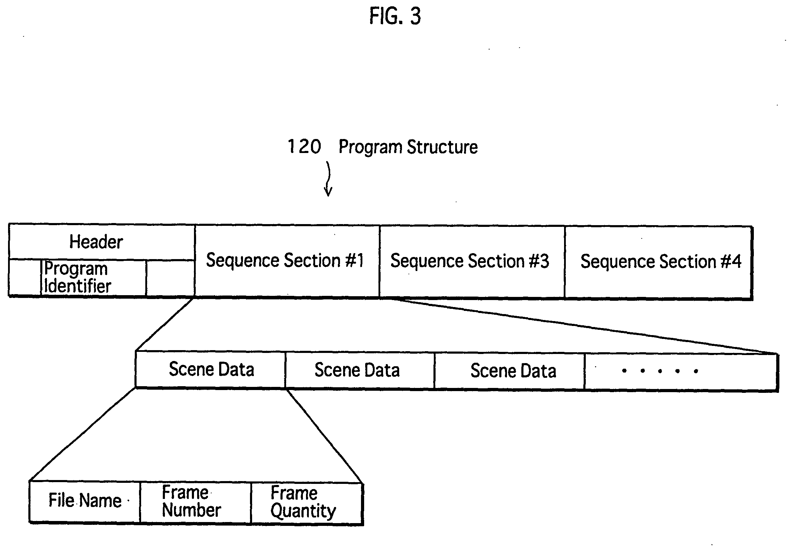

As the example in FIG. 3 indicates, the program structure comprises a header and at least one sequence section.

The header includes a program identifier that serves the purpose of identifying the program.

The sequence section includes a plurality of units of scene data. The scene data includes a file name, a frame identification number, and a frame quantity. The file name serves as an identifier for the purpose of identifying particular raw image data stored in information storage unit 101. The frame identification number serves as an identifier for the purpose of identifying one particular frame image within the raw image data identified above. The frame quantity indicates the number of frame images that continue on from the frame image identified by the frame identification number. This indicates the number of frames to be distributed and reproduced.

The plurality of frame images specified by the file name, frame identification number and frame quantity included in the scene data are what make up the scene that corresponds to that scene data.

The program structure 120 of FIG. 3 includes a sequence section #1, a sequence section #2, and a sequence section #3. These sequence sections #1 through #3 respectively correspond to the earlier-mentioned main program, DC edition program, and CM edition program.

### (2) Program Production Unit 104

In accordance with commands made by the user, program production unit 104 produces the above program structure by using a plurality of raw image data stored in information storage unit 101. A program production unit such as this, referred to as an image editing apparatus, is commonly known by those practiced in the field, so no further explanation will be provided here.

### (3) Input Unit 106

Input unit 106 receives from the user inputs of program identifiers used for identifying the program structure. Then input unit 106 outputs those program identifiers to extraction unit 102.

### (4) Extraction Unit 102

Extraction unit 102 receives the program identifiers from input unit 106. Then it retrieves from information storage unit 101 the program structures identified by the program identifiers.

Next, extraction unit 102 retrieves from information storage unit 101 the raw image data identified by the file name included in each unit of scene data from within every sequence section that is included within the program structure retrieved above.

And finally, extraction unit 102 transmits the retrieved program structure and raw image data to CH distribution system 20 via transmission/reception unit 103.

### (5) Transmission/reception unit 103

Transmission/reception unit 103 serves transmitting and receiving functions between extraction unit 102 and CH distribution system 20.

### (6) Display Unit 105

Display unit 105 displays the information.

### 1.2. The Structure of CH Distribution Subsystem 20

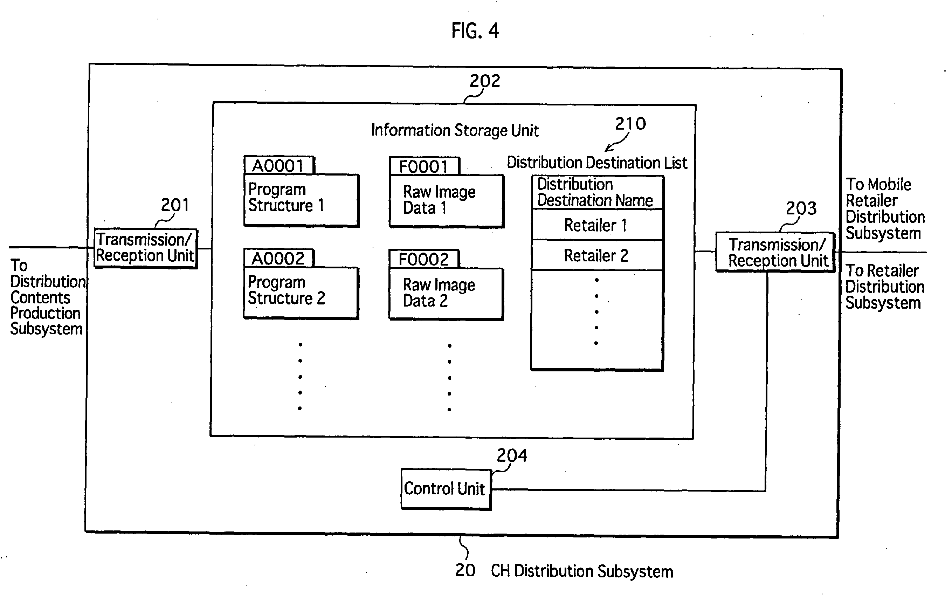

As shown in FIG. 4, CH distribution subsystem 20 comprises transmission/reception unit 201, information storage unit 202, transmission/reception unit 203, and control unit 204.

Similar to distribution contents production subsystem 10, CH distribution subsystem 20 is, concretely speaking, a computer system, and it performs its functions based on the running of a computer program by a microprocessor.

### (1) Transmission/reception unit 201

Transmission/reception unit 201 receives the program structure and raw image data from extraction unit 102 of distribution contents production subsystem 10. Then it writes the received program structure and raw image data onto information storage unit 202.

### (2) Information Storage Unit 202

Information storage unit 202 has a distribution destination list stored in advance. And it is provided with a storage area for the storage of a plurality of program structures and raw image data.

The distribution destination list includes a plurality of distribution destination names. These distribution destination names serve as identifiers for identifying the distribution destination of the information.

### (3) Control Unit 204

Control unit 204 outputs transmission commands to transmission/reception unit 203 to have it transmit the program structure and the raw image data.

### (4) Transmission/reception unit 203

Transmission/reception unit 203 receives transmission commands from control unit 204. Upon receiving the transmission commands, it retrieves a) every distribution destination name from the distribution destination list, and b) every raw image data and every program structure from information storage unit 202. Then, via internet 80, it transmits the retrieved program structures and raw image data to the distribution destinations identified by each distribution destination name.

### 1.3. The Structure of Mobile Retailer Distribution Subsystem 30

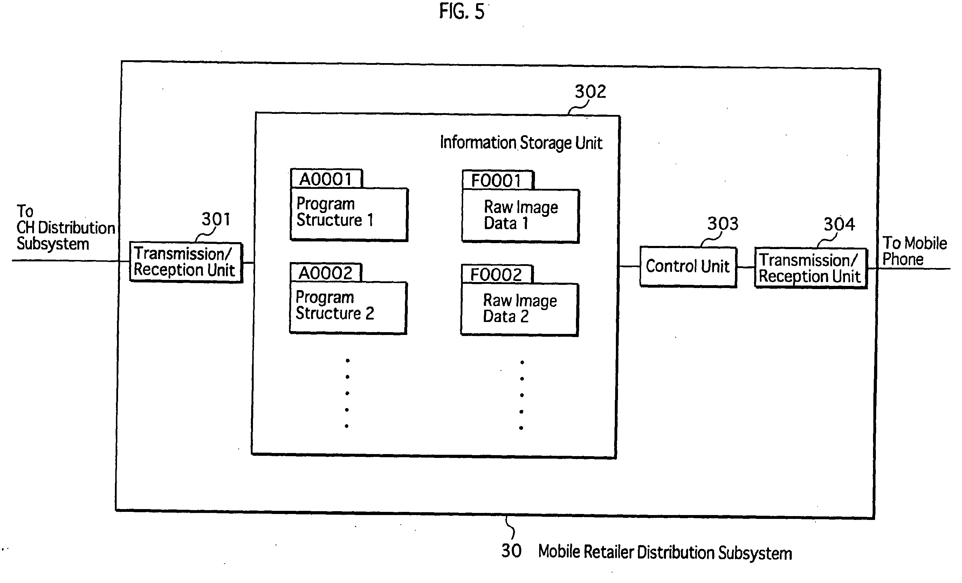

As shown in FIG. 5, Mobile retailer Distribution Subsystem 30 comprises transmission/reception unit 301, information storage unit 302, transmission/reception unit 303, and control unit 304.

Similar to distribution contents production system 10, mobile retailer distribution subsystem 30 is, concretely speaking, a computer system, and it performs its functions based on the running of a computer program by a microprocessor.

### (1) Information Storage Unit 302

Information storage unit 302 is provided with an area designated for the storage of a plurality of program structures and a plurality raw image data.

### (2) Transmission/reception unit 301

Transmission/reception unit 301 receives the program structures and raw image data from CH distribution subsystem 20. Then it writes this information onto information storage unit 302.

### (3) Control Unit 303

Control unit 303 receives program identifiers from mobile phone 50 via mobile phone network 90 and transmission/reception unit 304.

Upon receiving the program identifiers, control unit 303 retrieves from information storage unit 302 the program structures identified by the identifiers. Using these retrieved program structures, control unit 303 then uses the process explained below to produce a program based on a plurality of frame images. Then, control unit 303 transmits the produced program to mobile phone 50 via transmission/reception unit 304 and mobile phone network 90.

Below is an explanation of the production of a program by control unit 303.

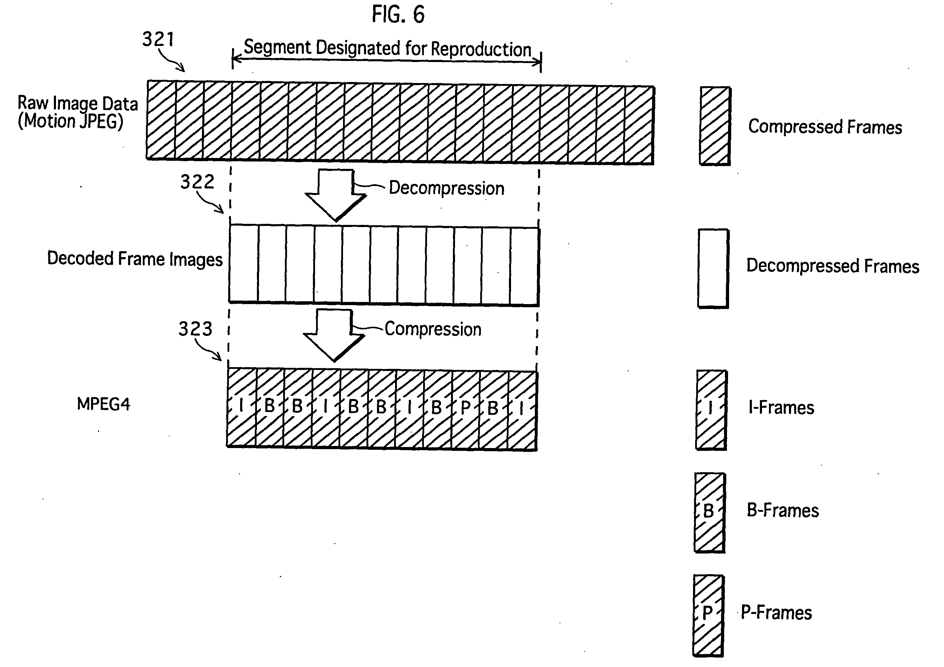

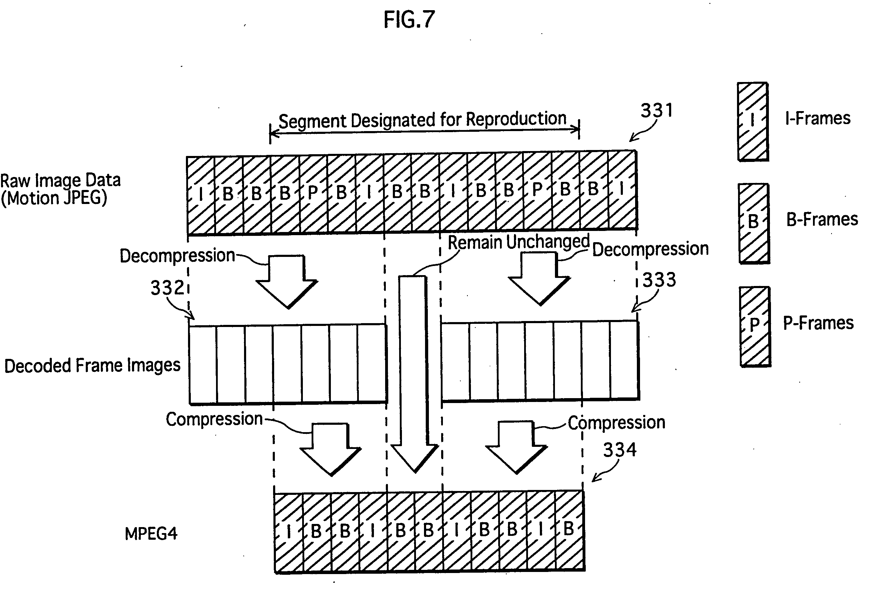

Control unit 303 extracts sequence section #1 from the retrieved program structure. Then, for each unit of scene data included within sequence section #1, control unit 303 repeats the steps below.
① It retrieves from information storage unit 302 the raw image data identified by the file names within the scene data.
② Using the data within the raw image data, it determines whether the compression of the retrieved raw image data was achieved by intra-frame compression or inter-frame compression.
③ - 1 In the case of intra-frame compression:
   In this case, as indicated in FIG. 6, this means that the raw image data is a data stream compression encoded using the Motion JPEG standard. Control unit 303 extracts from this raw image data a compression coded stream that corresponds to the plurality of frame images designated by the frame identification number and the frame quantity (indicated in the drawing as the segment designated for reproduction), both of these found within the scene data. Next, it decompresses the extracted compressed code stream, producing the plurality of frame images in their decoded form. Then control unit 303 continues by creating a new compressed code stream by recompressing the decoded frame images using the MPEG4 standard.
   Note that within mobile retailer distribution subsystem 30, frame images are being sent to a mobile phone with limited space in which to store the frame images. Therefore, this step is helpful in that the data compressed according to the MPEG4 standard is set to be compressed at a higher compression rate than the data stream at the beginning of the step that is compressed according to the Motion JPEG standard.
③ - 2 In the case of inter-frame compression
   In this case, as indicated in FIG. 7, this means that the raw image data was compression encoded according to MPEG4 standards to begin with. Control unit 303 extracts from this raw image data at least one basic compressed frame image group that includes a compression coded stream that corresponds the plurality of frame images designated by the frame identification number and the frame quantity (indicated in the drawing as the segment designated for reproduction), both of these found within the scene data. Next, by decompressing the extracted basic compressed frame image group, a plurality of frame images in their decoded form are produced. Then, out of the plurality of decoded frame images formed, control unit 303 selects specific decoded frame images designated by the above-mentioned frame identification number and frame quantity. And following this, it produces a new compressed code stream by compression encoding these selected decoded frame images according to the MPEG4 standard.
   In this case as well, the MPEG4 compression encoding is set at an even higher compression rate.
   Note that when a program is transmitted to a personal computer or some other apparatus with sufficient memory for the storage of frame images, it is acceptable that the compression rate not be changed. In addition, under these circumstances, if there are basic compressed frame image groups that will undoubtedly be included within the compression encoded stream that corresponds to the plurality of frame images designated by the frame identification number and frame quantity within the scene data, it is not necessary to decompress and recompress them. They can be outputted in unchanged form as a compression encoded stream.

In this manner, control unit 303 repeats the steps to produce a plurality of new compression encoded streams from each unit of scene data included in sequence section #1. Then it combines these newly produced compression encoded streams in the order in which they were produced, thus forming a new program.

### (4) Transmission/reception unit 304 transmits and receives data between control unit 303 and mobile phone 50 via mobile phone network 90.

### 1.4. The Structure of Retailer Distribution Subsystem 40

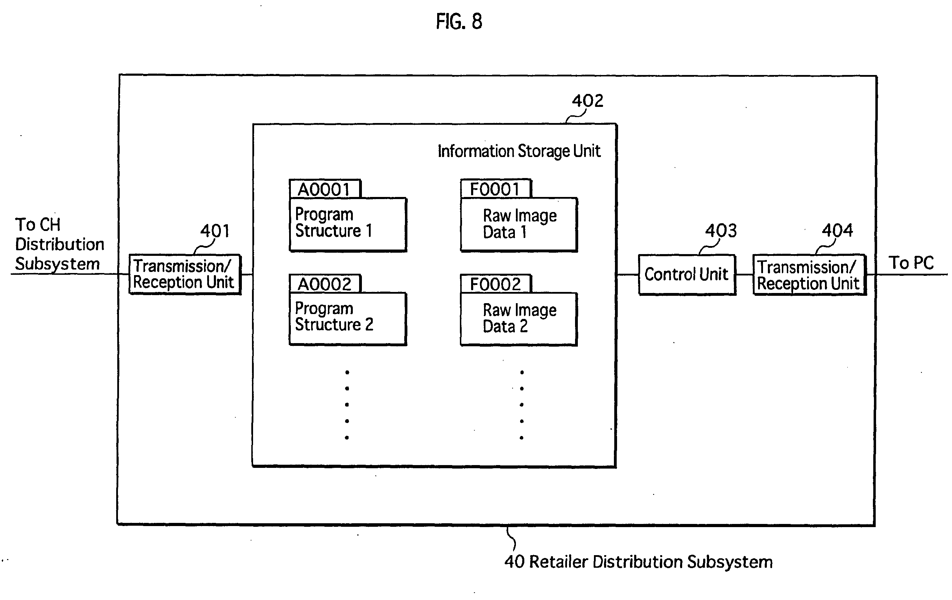

As indicated in FIG. 8, Retailer distribution subsystem 40 comprises transmission/reception unit 401, information storage unit 402, transmission/reception unit 403, and control unit 404.

Similar to distribution contents production system 10, retailer distribution subsystem 40 is, concretely speaking, a computer system, and it performs its functions based on the running of a computer program by a microprocessor.

### (1) Information Storage Unit 402

Information storage unit 402 is provided with an area designated for the storage of a plurality of program structures and a plurality of units of raw image data.

### (2) Transmission/reception unit 401

Transmission/reception unit 401 receives the program structures and raw image data from CH distribution subsystem 20. Then it writes this information onto information storage unit 402.

### (3) Control Unit 403

Control unit 403 receives program identifiers from PC 60 via internet 80 and transmission/reception unit 404.

Upon receiving the program identifiers, control unit 403 retrieves from information storage unit 402 the program structures identified by the identifiers.

Next, control unit 403 extracts sequence section #1 from the retrieved program structure. Then, for each unit of scene data included within the extracted sequence section #1, control unit 403 retrieves from information storage unit 402 the raw image data identified by the file name within the scene data.

Next, control unit 403 extracts from this raw image data one or more basic compressed frame image groups that include compression coded streams that correspond to the plurality of frame images designated by the frame identification numbers and the frame quantities, both of these identifiers found within the scene data. These one or more extracted basic compressed groups are then combined to create new raw image data. This newly produced raw image data can then be transmitted to PC 60. In this case, the volume of data transmitted to PC 60 will be less than the above instance, and this newly formed data will cause a shift in the frame identification number

### (4) Transmission/reception unit 404

Transmission/reception unit 404 transmits and receives data between control unit 403 and PC 60 via internet 80.

### 1.5. The Structure of Mobile Phone 50

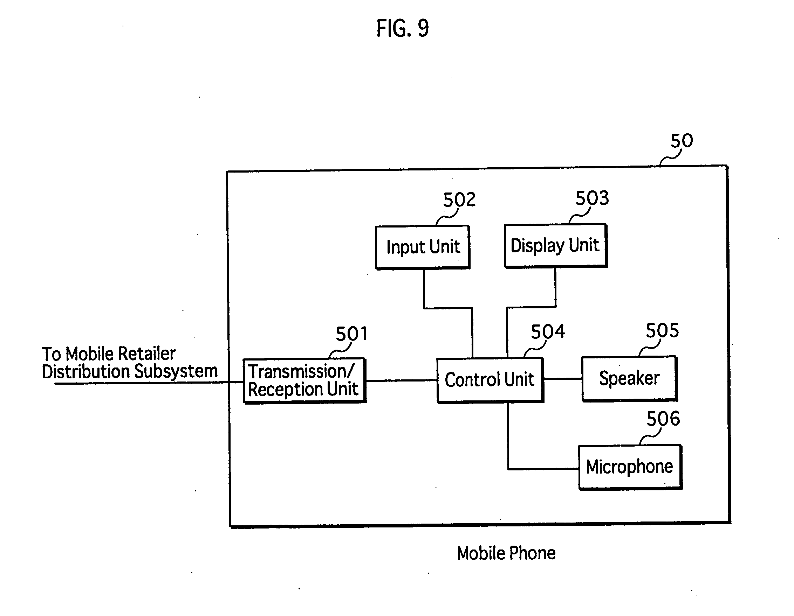

As indicated in FIG. 9, Mobile Phone 50 comprises transmission/reception unit 501, input unit 502, display unit 503, control unit 504, speaker 505, and microphone 506.

Mobile phone 50 is a portable telephone device capable of mobile communication via radio waves. Concretely speaking, it is a computer system including a microprocessor, ROM, RAM, a liquid crystal display unit, a key pad, a communication unit, and an antenna. Stored within the RAM are mobile phone computer programs for communication, key functions, liquid crystal display, and the management of the various data. Mobile phone 50 performs its functions based on the running of the mobile phone computer programs by the above-mentioned microprocessor.

### (1) Input unit 502

Input Unit 502 receives program identifier inputs from the user. Then, it transmits the received program identifiers to mobile retailer distribution subsystem 30 via control unit 504, transmission/reception unit 501 and mobile phone network 90.

### (2) Control Unit 504

Via mobile phone network 90 and transmission/reception unit 501, control unit 504 receives one complete program set. Then it produces decoded frame images by decompressing this program according to MPEG4 standards. Next, it outputs these decoded frame images to display unit 503. Additionally, if the program includes audio data, control unit 504 decodes that and outputs the decoded audio signals to speaker 505. Finally, control unit 504 receives, one by one in sequence, the plurality of compression encoded streams that make up an individual program set. The rate at which this occurs depends on the rate at which the program is received and the capacity of the buffer within the phone intended for storing the program.

### (3) Display Unit 503

Display unit 503 receives decoded frame images from control unit 504 and displays them in the order in which they were received.

### (4) Speaker 505

Speaker 505 receives audio signals from control unit 504 and outputs that audio.

### (5) Transmission/reception unit 501

Transmission/reception unit 501 transmits and receives data between mobile retailer distribution subsystem 30 and control unit 504 via mobile phone network 90.

### 1.6. The Structure of PC 60

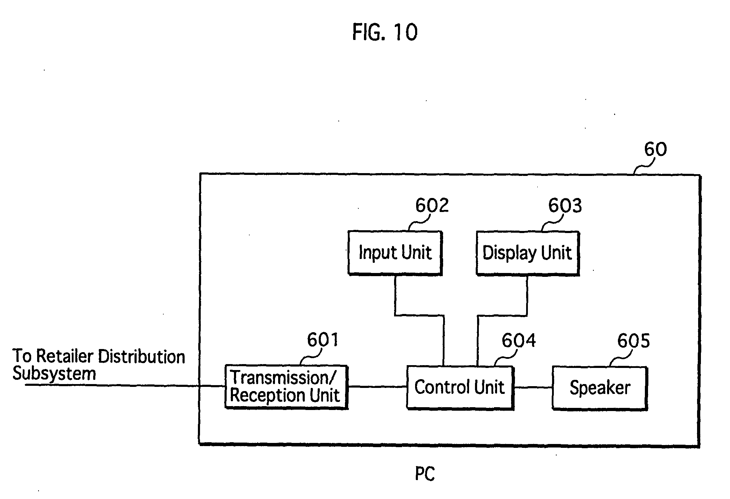

As indicated in FIG. 10, PC 60 comprises transmission/reception unit 601, input unit 602, display unit 603, control unit 604, and speaker 604.

Concretely speaking, PC 60 is a computer system comprising a microprocessor, ROM, RAM, a hard disc unit, a liquid crystal display unit, a key board, a mouse, and a LAN connection unit. A computer program is stored on the hard disc unit. PC 60 performs its functions based on the running of the computer program by the microprocessor.

### (1) Input Unit 602

Input Unit 602 receives program identifier inputs from the user. Then, it transmits the received program identifiers to retailer distribution subsystem 40 via control unit 604, transmission/reception unit 601 and internet 80.

### (2) Control Unit 604

Via internet 80 and transmission/reception unit 601, control unit 604 receives the program structure and raw image data from retailer distribution subsystem 40. Then it stores this information.

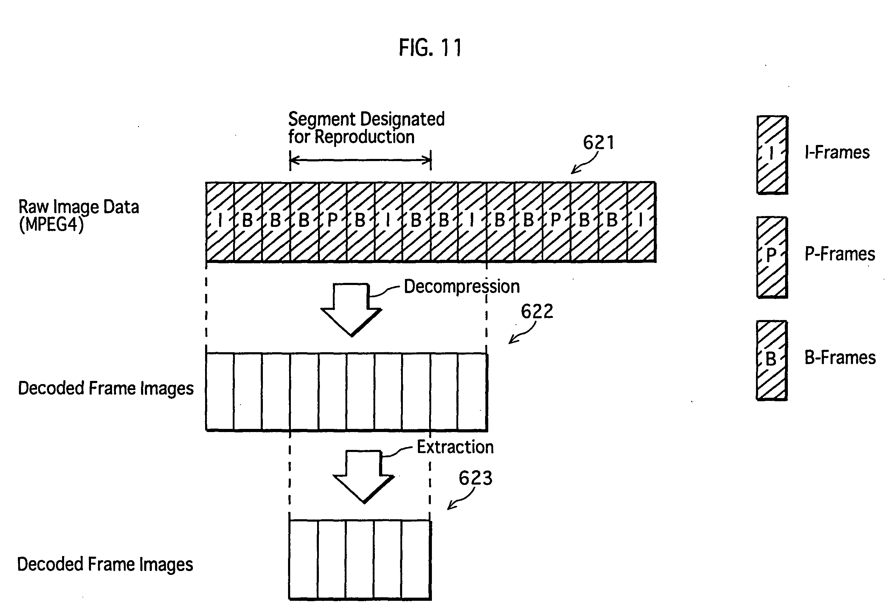

Next, control unit 604 extracts sequence section #1 from the received program structure, then it performs the steps below for each unit of scene data included within sequence section #1.
① Control unit 604 retrieves the raw image data identified by the file name included within the scene data. As shown in the example of FIG. 11, the raw image data in this case is compression encoded data compressed using inter-frame compression according to the MPEG4 standard.
② As further indicated in this diagram, Control unit 604 extracts from this raw image data at least one basic compressed frame image group that includes a compression coded stream that corresponds the plurality of frame images designated by the frame identification number and the frame quantity (indicated in the drawing as the segment designated for reproduction), both of these found within the scene data. Next, by decompressing the extracted basic compressed frame image group, a plurality of frame images in their decoded form are produced. Then, out of the plurality of decoded frame images formed, control unit 604 selects specific decoded frame images designated by the above-mentioned frame identification number and frame quantity and outputs these decoded frame images to display unit 603.

Note that if the program includes audio data, control unit 604 decodes that data and sends the audio signals to speaker 605.

### (3) Display Unit 603

Display unit 603 receives decoded frame images from control unit 604 and displays them in the order in which they were received.

### (4) Speaker 605

Speaker 605 outputs audio after receiving audio signal from control unit 604.

### (5) Transmission/reception unit 601

Transmission/reception unit 601 transmits and receives data between retailer distribution subsystem 40 and control unit 604 via internet 80.

### 1.7. Broadcast Subsystem 70

Broadcast subsystem 70 has the same structure as mobile retailer distribution subsystem 30 or retailer distribution subsystem 40.

Broadcast subsystem 70 receives program structures and raw image data from CH distribution subsystem 20. Then, in accordance with these received program structures and raw image data, it reproduces the program, or the program structures and all of the raw image data, in a manner similar to mobile retailer distribution subsystem 30 or retailer distribution subsystem 40. Then, via broadcast satellite 71, it broadcasts the program, or program structures and raw image data, on digital broadcast waves.

### 1.8. Digital Broadcast Reception Apparatus 75

Digital broadcast reception apparatus 75 has the same structure as mobile phone 50 or PC 60.

Via broadcast satellite 71, digital broadcast reception apparatus 75 receives digital broadcast waves broadcast from broadcast subsystem 70. Then it extracts the program from the received digital broadcast waves and reproduces the program in the same manner as mobile phone 50. Alternatively, if it is processing program structures and all of the raw image data, digital broadcast reception apparatus 75 extracts from the digital broadcast waves the program structures and the raw image data and uses it to produce the program in the same manner as PC 60. Then this program is played.

### 2. The Operations of Image Distribution System 1

The following is an explanation of the operations of image distribution system 1.

### 2.1. The Operations of distribution contents production subsystem 10

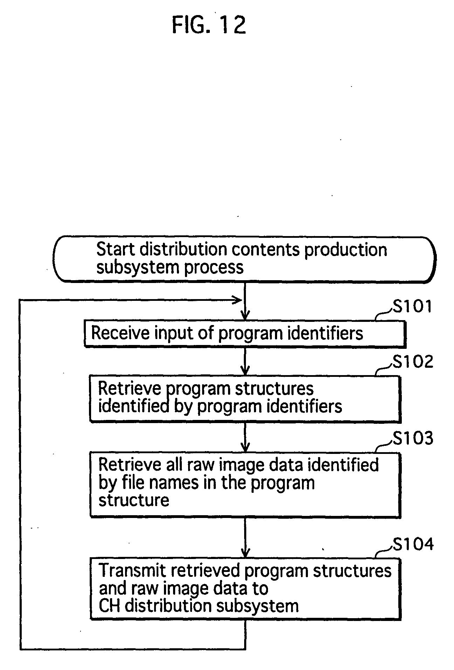

The flowchart of FIG. 12 will be used in the explanation of the operations of distribution contents production subsystem 10.

Input unit 106 receives from the user input of a program identifier used for identifying the program structure, then it outputs that program identifier to extraction unit 102 (Step S101).

Extraction unit 102 receives the program identifier from input unit 106. Then it retrieves from information storage unit 101 the program structure identified by the program identifier (Step S102).

Next, extraction unit 102 retrieves from information storage unit 101 the raw image data identified by the file names included in each unit of scene data from within every sequence section that is included within the program structure retrieved above (Step S103).

And finally, extraction unit 102 transmits the retrieved program structure and raw image data to CH distribution system 20 via transmission/reception unit 103 (Step S104). Then the process is repeated from Step S101.

### 2.2. The Operations of CH Distribution Subsystem 20

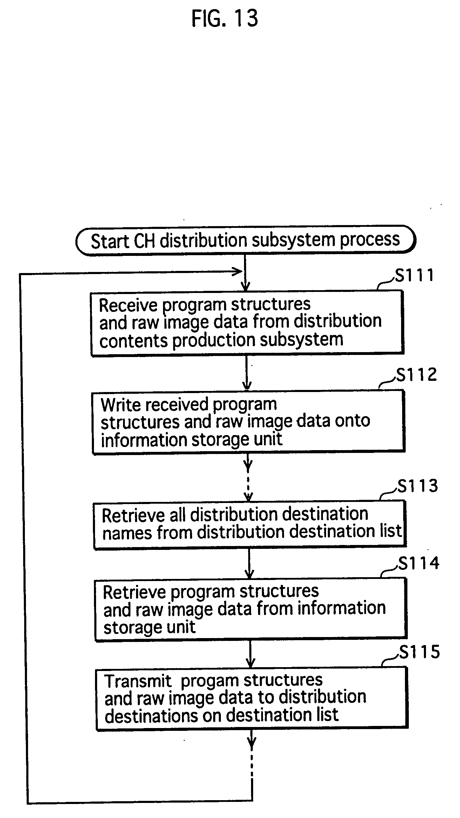

The flowchart of FIG. 13 will be used in explaining the operations of CH distribution subsystem 20.

Transmission/reception unit 201 receives the program structure and raw image data from extraction unit 102 of distribution contents production subsystem 10 (Step S111). Then it writes the received program structure and raw image data onto information storage unit 202 (Step S112).

Control unit 204 outputs transmission commands to transmission/reception unit 203 to have it transmit the program structure and the raw image data. Transmission/reception unit 203 receives transmission commands from control unit 204. Upon receiving the transmission commands, it retrieves a) every distribution destination name from the distribution destination list (Step S113), and b) every raw image data and every program structure from information storage unit 202 (Step S114). Then, via internet 80, it transmits the retrieved program structures and raw image data to the distribution destinations identified by each distribution destination name (Step S115).

### 2.3. Operations of Mobile Retailer Distribution Subsystem 30 and Mobile Phone 50

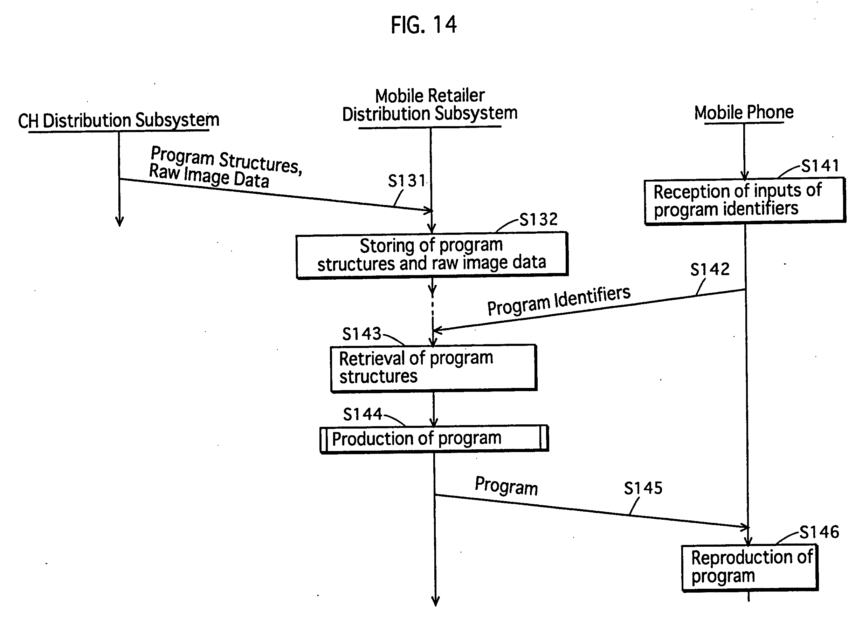

The flowchart of FIG. 14 will be used in explaining the operations of mobile retailer distribution subsystem 30 and mobile phone 50.

Transmission/reception unit 301 receives the program structures and raw image data from CH distribution subsystem 20 (Step S131). Then it writes this information onto information storage unit 302 (Step S132).

Next, input unit 502 receives from the user inputted program identifiers (Step S141). Then it transmits these received program identifiers to mobile retailer distribution subsystem 30 via control unit 504, transmission/reception unit 501, and mobile phone network 90 (Step S142).

Control unit 303 receives program identifiers from mobile phone 50 via mobile phone network 90 and transmission/reception unit 304 (also included in Step S142).

Upon receiving the program identifiers, control unit 303 retrieves from information storage unit 302 the program structures identified by the identifiers (Step S143). Using these retrieved program structures, control unit 303 then uses the process explained below to produce a program based on a plurality of frame images (Step S144). Then, control unit 303 transmits the produced program to mobile phone 50 via transmission/reception unit 34 and mobile phone network 90 (Step S145).

Via mobile phone network 90 and transmission/reception unit 501, control unit 504 receives one complete program set. Then it produces decoded frame images by decompressing this program according to MPEG4 standards. Next, it outputs these decoded frame images to display unit 503, which then displays them (Step 146).

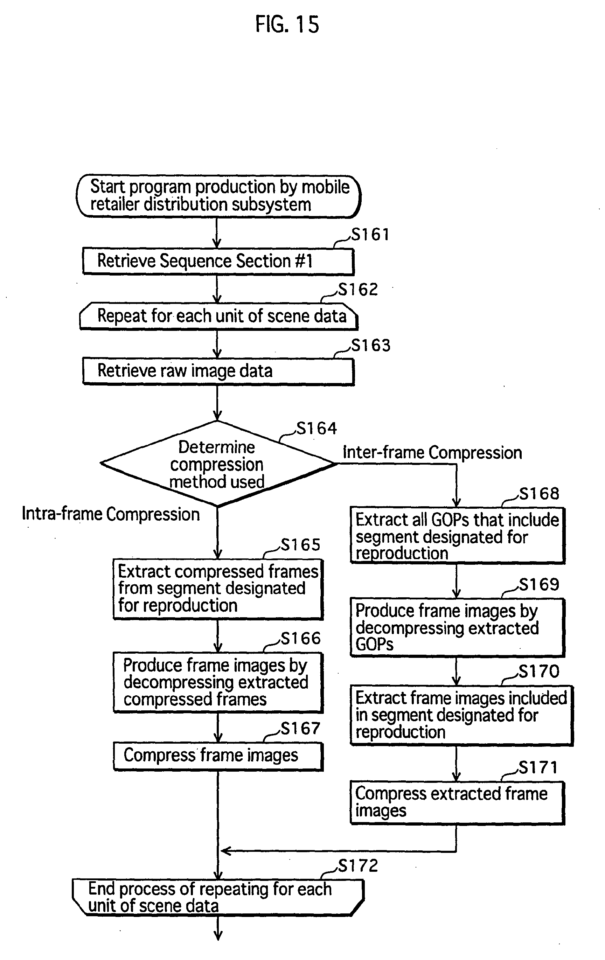

The flowchart of FIG. 15 will be used to further provide a detailed explanation of the operations involved in the production of a program by control unit 303 in Step S144.

Control unit 303 extracts sequence section #1 from the retrieved program structure (Step S161). Then, for each unit of scene data included within sequence section #1, control unit 303 repeats the steps below. This entire process makes up steps S162 through S172.

Control unit 303 retrieves from information storage unit 302 the raw image data identified by the file names within the scene data (Step S163).

Using the data within the raw image data, it determines whether the compression of the retrieved raw image data was achieved by intra-frame compression or inter-frame compression.

If judged to be intra-frame compression (Step 164), control unit 303 extracts from this raw image data a compression coded stream that corresponds the plurality of frame images designated by the frame identification number and the frame quantity, both of these found within the scene data (Step S165). Next, it decompresses the extracted compressed code stream, producing the plurality of frame images in their decoded form (Step S166). Then control unit 303 continues by creating a new compressed code stream by re-compressing the decoded frame images using the MPEG4 standard (Step S167).

If the compression is determined to be inter-frame compression (Step S164), control unit 303 extracts from this raw image data at least one basic compression unit that includes a compression coded stream that corresponds the plurality of frame images designated by the frame identification number and the frame quantity, both of these found within the scene data (Step S168). Next, by decompressing the extracted basic compression unit, it produces a plurality of frame images in their decoded form (Step S169). Then, out of the plurality of decoded frame images formed, control unit 303 extracts specific decoded frame images designated by the above-mentioned frame identification number and frame quantity (Step S170). And following this, it produces a new compressed code stream by compression encoding these extracted decoded frame images according to the MPEG4 standard (Step S171).

### 2.4. The Operations of Retailer Distribution Subsystem 40 and PC 60

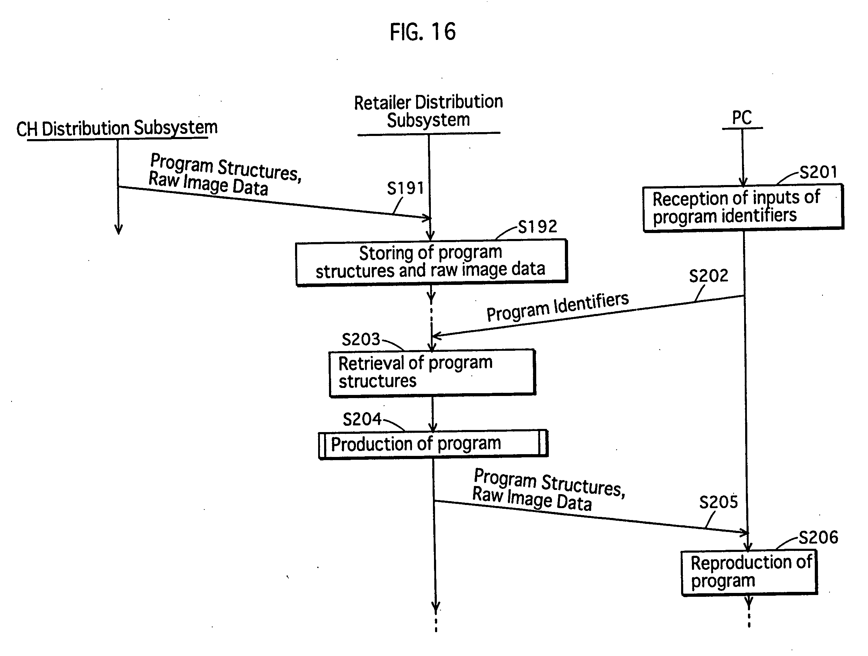

The flowchart of FIG. 16 will be used for explaining the operations of retailer distribution subsystem 40 and PC 60.

Transmission/reception unit 401 receives the program structures and raw image data from CH distribution subsystem 20 (Step S191). Then it writes this information onto information storage unit 402 (Step S192).

Input Unit 602 receives program identifier inputs from the user (Step S201). Then, it transmits the received program identifiers to retailer distribution subsystem 40 via control unit 604, transmission/reception unit 601 and internet 80 (Step S202).

Control unit 403 receives program identifiers from PC 60 via internet 80 and transmission/reception unit 404 (Step S202).

Upon receiving the program identifiers, control unit 403 retrieves from information storage unit 402 the program structures identified by the identifiers (Step S203).

Next, control unit 403 extracts sequence section #1 from the retrieved program structure, and for each unit of scene data included within the extracted sequence section #1, it retrieves from information storage unit 402 the raw image data identified by the file name within the scene data (Step S204). Then, via transmission/reception unit 404 and internet 80, it transmits the retrieved program structures and all of the retrieved raw image data to PC 60 (Step S205).

Via internet 80 and transmission/reception unit 601, control unit 604 receives the program structure and raw image data from retailer distribution subsystem 40, and then it stores this information (Step S205). Next, PC 60 reproduces the program (Step S206).

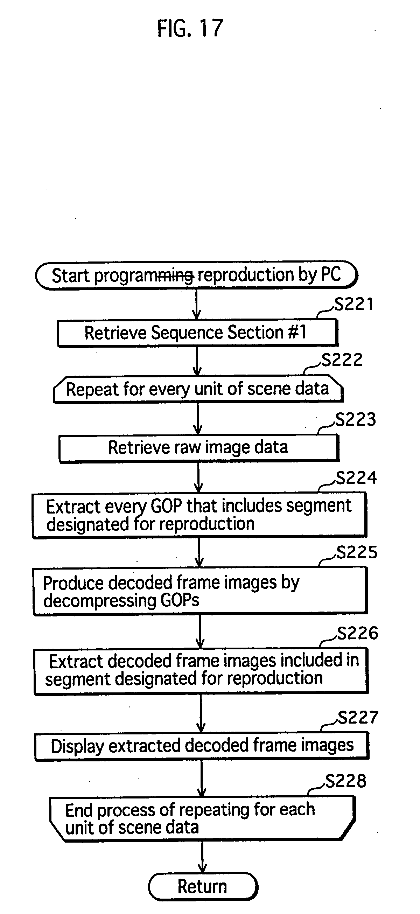

The flowchart of FIG. 17 will be used to further explain in detail the operations involved in the reproduction of the program that takes place in Step S206.

Control unit 604 extracts sequence section #1 from the received program structure (Step S221), then it performs the steps below for each unit of scene data included within sequence section #1. These steps make up Steps S222 through S228.

Control unit 604 retrieves the raw image data identified by the file name included within the scene data (Step S223).

Next, it extracts from this raw image data at least one basic compressed frame image group that includes a compression coded stream that corresponds the plurality of frame images designated by the frame identification number and the frame quantity, both of these found within the scene data (Step S224). Next, by decompressing the extracted basic compressed frame image group, a plurality of frame images in their decoded form are produced (Step S225). Then, out of the plurality of decoded frame images formed, control unit 604 extracts specific decoded frame images designated by the above-mentioned frame identification number and frame quantity (Step 226). Finally, it outputs these extracted decoded frame images to display unit 603 which then displays them (Step S227).

### 3. Summary

An object of the present invention is to provide a method for, at the time when a server apparatus distributes data, automatically producing the raw image data to be distributed.
① The raw image data stored within the server apparatus is stored after undergoing intra-frame compression, not inter-frame compression.
   This allows for easier extraction of the data that corresponds to the particular frames desired. Then, once the data is extracted and decompressed, it is compressed via inter-frame compression and then transmitted.
② The raw image data stored within the server apparatus is stored after undergoing inter-frame compression.
   The inter-frame compressed image units that include the starting point and the finishing point of the section to be distributed are extracted and decompressed. Next, the section to be distributed is recompressed also using inter-frame compression, resulting in distribution data that is then transmitted.
   There are two shortcomings with the 2 methods described above: 1) When the client load is low, the server apparatus load becomes high; 2) They lack flexibility that allows the client to vary (edit) the assembly of consecutive frame image sections.
   Below are methods wherein the decompressing is performed by the client, thereby reducing the load on the server apparatus and allowing for greater flexibility in the usage of consecutive frame image sections.
③ The server apparatus distributes raw image data and data designating the frame images to be reproduced, both of these forms of data having been compressed via inter-frame compression.
   The client decompresses the raw image data using the same method as ② above, reproducing the necessary sections. It is also possible for the client to re-compress the data when needed.
④ The server apparatus distributes the distribution data that includes within it the raw image data and data designating the sections to be reproduced, both having undergone inter-frame compression. The distribution terminal has the same function as ③ above, and the distribution server apparatus has the functions of ① and ② above.
⑤ The server apparatus is provided with a system for distributing a frame segment reproduction computer program for initiating the processes that occur in a terminal such as that of ③ above. The terminal is provided with a system for interpreting and running the distributed reproduction computer program for reproducing indicated frame image sections.
⑥ The server apparatus has the same functions as ①, ②, and ③ above, and the server apparatus within the distribution network is provided from the outset with the ability to process the distributed data.

As explained above, the present invention is a program distribution system including: a) a program storage apparatus for storing either non-compressed raw image data or raw image data that has been compressed via intra-frame compression; and b) a program distribution server apparatus having (i) a system for extracting a set segment of frame images from the above-mentioned raw image data, and (ii) a system for compressing the extracted frame images via inter-frame compression and distributing those compressed images.

Additionally, the present invention is a program distribution system including: a) a program storage apparatus for storing raw image data that has been compressed via inter-frame compression; and b) a program distribution server apparatus having (i) a system for extracting and expanding a set segment of frame images, as a part of a group of inter-frame compressed frame images extracted from the above-mentioned raw image data, and (ii) a system for. recompressing only the set segment of frame images and distributing those compressed frame images.

Additionally, the present invention is a program distribution system including: a) a program storage apparatus for storing raw image data that has been compressed via inter-frame compression; b) a program distribution server apparatus having a system for extracting a set segment of frame images, as a part of a group of inter-frame compressed frame images, from the above-mentioned raw image data, and then distributing the extracted frame images; and c) a program reproduction apparatus having a system for (i) extracting, from the inter-frame compressed raw image data, a group of frame images that correspond to a designated section, (ii) expanding that group of frame images, and (iii) reproducing only that designated section.

Additionally, the present invention is a program distribution system including: a) a distribution server apparatus that performs (i) a designated section reproduction procedure for reproducing a designated section of frame images from inter-frame compressed raw image data and (ii) distribution of the reproduced segment data by including it as a part of distribution data; b) a terminal apparatus provided with the ability to use the distributed data to perform the terminal-end reproduction functions listed thus far; and c) a distribution server apparatus capable of performing the distribution server functions mentioned thus far.

Additionally, the present invention is a distribution system including a) a distribution server apparatus capable of distributing a computer program for reproducing segments of frame images in the same manner as the above-mentioned distribution terminal apparatus, and b) a distribution terminal apparatus capable of accepting this computer program and performing the reproductive functions accordingly.

Concretely speaking, within program distribution system 1, distribution contents production subsystem 10 further includes a computer program storage unit and a computer program transmission unit.

The above-mentioned computer program storage unit has stored within it: a) a decompression computer program for producing a plurality of temporarily decompressed frame images by decompressing raw image data; and b) an extraction computer program for extracting, from the above temporarily decompressed frame images, those frame images that correspond to frame images designated by the above-mentioned designating information. And the above-mentioned computer program transmission unit retrieves the decompression computer program and the extraction computer program from the computer program storage unit and transmits them to PC 60.

Transmission/reception unit 601 of PC 60 receives the decompression computer program and the extraction program. Then, the microprocessor within PC 60 operates in accordance with the decompression computer program and extraction computer program to: a) decompress the received raw image data and produce a plurality of temporarily decompressed frame images; and b) extract, from the above temporarily decompressed frame images, those frame images that correspond to frame images designated by the received designating information. Display unit 603 displays the frame images that are extracted.

And finally, the present invention is a program distribution system including: a) a distribution server apparatus that performs (i) a designated segment reproduction procedure for reproducing a designated segment of frame images from inter-frame compressed raw image data and (ii) distribution of the reproduced segment of frame images by including them in distribution data; b) a server apparatus within the distribution network capable of processing the distributed data; and c) a distribution server apparatus capable of the distribution server functions mentioned thus far.

As designated above, with the present invention, entire sets of distributed inter-frame compressed raw image data are not reproduced. Rather, the present invention is capable of reproducing only the frame images that are designated. As a result, not only does this eliminate the limitations on the forms of compression applied to the raw image data accrued within the distribution server apparatus, it also eliminates the limitations on the forms of compression applied to raw image data used in the production of distribution contents.

Furthermore, given the characteristics of the reproduction terminal apparatus and distribution server apparatus of the present invention, it is possible to distribute, along with the raw image data, data regarding which reproduction method should be used to reproduce the designated frame images. This means that the reproduction method used on the designated frame images is not predetermined and can be changed automatically. Additionally, it is possible to distribute the reproduction algorithm itself, making it unnecessary to install a new reproduction terminal apparatus in order to perform a new method of reproduction.

Note that the present invention was explained using the above embodiment as an example, but, of course, it is not limited to this embodiment. Below are some examples of other embodiments that would be included in the present invention.
(1) It can be designed so that the distribution of the program to the user takes place only after the user has paid the provider the fee for distributing the program. It is acceptable in such a case that payment take place via a communications network.
(2) What has been explained assumes the distribution of what would be considered the main program. However, it is also acceptable for DC editions and CM editions of the program to be distributed via this system.
(3) It is acceptable to design the system with a retailer distribution subsystem in every desired geographic region, making it possible to distribute a program specifically designated for particular regions.
(4) The embodiment laid out above was described as distributing program information via the internet, mobile phone network, or satellite digital broadcast network. However, the present invention is not limited to these distribution networks. For example, a cable television network or a land-based digital broadcasting network can be used. Additionally, it is possible to distribute the information by storing it on a recording medium such. as a CD-R or DVD and selling it.
(5) The present invention can be realized by the methods described above, and it is acceptable for the methods to be in the form of a computer program that is carried out by a computer. And it is also acceptable that the methods be in the form of digital signals based on the computer program.
   Additionally, with the present invention, it is acceptable that the above-mentioned computer program or digital signals be stored on a recording medium whose information is computer retrievable. Such a storage medium could be a floppy disk, hard disk, CD-ROM, MO, DVD, DVD-ROM, DVD-RAM, or a semiconductor memory. Also, it is acceptable that the entirety of the present invention be in the form of the computer program or digital signals mentioned above.
   Additionally, it is acceptable that the above-mentioned computer program or digital signals be transmitted via a network such as an electrical communications circuit, a wireless or wired communications circuit, or the internet.
   Additionally, it is acceptable that the present invention be a computer system provided with a microprocessor and a memory, wherein the memory has the above-mentioned computer program stored within and the microprocessor operates in accordance with the stored computer program.
   Additionally, it is acceptable that, either via some sort of network or by being recorded onto a recording medium that is then transferred, the above-mentioned computer program or digital signals can be carried out on another independent computer.
(6) It is acceptable that the present invention be any combination or assembly of the above embodiment and variations of the embodiment.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A program distribution system for distributing, via a distribution network, a distribution program extracted from an original program, the program distribution system comprising:
an original program storage unit operable to store one original program, the original program including inter-frame compressed original frame images, inter-frame compression being a method whereby each frame image is compressed, with at least one frame image being compressed using as a reference one or more neighboring frame images;
a reception unit operable to receive segment information indicating a segment of the original frame images;
a decompression unit operable to decompress sections of the compressed original frame images to generate intermediate frame images that include the frame images indicated by the segment information;.
a re-compression unit operable to a) extract from the intermediate frame images the frame images indicated by the segment information, and b) generate re-compressed frame images by performing inter-frame compression on the extracted frame images; and
a distribution unit operable to distribute, via a distribution network, the re-compressed frame images as the distribution program.

2. The program distribution system of Claim 1, further comprising:
a receiving unit operable to receive the distributed re-compressed frame images; and
a reproduction unit operable to reproduce the received re-compressed frame images.

3. The program distribution system of Claim 2, being composed of a program storage apparatus, a program distribution server apparatus, and a reproduction terminal apparatus,
wherein
the program storage apparatus and the program distribution server apparatus are connected,
the program distribution server apparatus and the reproduction terminal apparatus are connected via a network,
the program storage apparatus includes the original program storage unit,
the program distribution server apparatus includes the reception unit, the decompression unit, the re-compression unit, and the distribution unit, and
the reproduction terminal apparatus includes the receiving unit and the reproduction unit.

4. A program distribution system for distributing, via a distribution network, a distribution program extracted from an original program, the program distribution system comprising:
an original program storage unit operable to store one original program, the original program including inter-frame compressed original frame images, and the inter-frame compressed original frame images including a plurality of compressed frame image groups, each made up of a prescribed number of frame images subjected to inter-frame compression, inter-frame compression being a method whereby each frame image is compressed, with at least one frame image using as a reference one or more neighboring frame images;
a reception unit operable to receive segment information indicating a segment of the original frame images;
a retrieval unit operable to retrieve, from the inter-frame compressed original frame images, a compressed frame image group that includes frame images indicated by the segment information;
a transmission unit operable to transmit, as the distribution program, the retrieved compressed frame image group;
a receiving unit operable to receive the transmitted compressed frame image group;
a decompression unit operable to decompress the received compressed frame image group to produce a plurality of temporarily decompressed frame images;
an extraction unit operable to extract, from the produced temporarily decompressed frame images, the frame images indicated by the segment information; and
a reproduction unit operable to reproduce the extracted frame images.

5. The program distribution system of Claim 4, being composed of a program storage apparatus, a program distribution server. apparatus, and a reproduction terminal apparatus, the program storage apparatus and the program distribution server apparatus being connected, and the program distribution server apparatus and the reproduction terminal apparatus being connected via a network, wherein
the program storage apparatus includes the original program storage unit,
the program distribution server apparatus includes the reception unit, the retrieval unit, and the transmission unit, and
the reproduction terminal apparatus includes the receiving unit, the decompression unit, the extraction unit, and the reproduction unit.

6. The program distribution system of Claim 4, further comprising:
a segment information transmission unit operable to transmit the segment information received by the reception unit; and
a segment information reception unit operable to receive the transmitted segment information, wherein
the extraction unit extracts decompressed frame images indicated by the segment information received by the segment information reception unit.

7. The program distribution system of Claim 4, further comprising:
a computer program storage unit operable to store a) a decompression computer program for producing a plurality of temporarily decompressed frame images by decompressing the received compressed frame image group, and b) an extraction computer program for extracting the temporarily decompressed frame images indicated by the segment information;
a computer program transmission unit operable to read the decompression computer program and the extraction computer program from the computer program storage unit, and to transmit the read decompression computer program and the read extraction computer program; and
a computer program reception unit operable to receive the transmitted decompression computer program and the transmitted extraction computer program, wherein
the decompression unit and the extraction unit share a microprocessor that operates in accordance with the decompression computer program and the extraction computer program to c) produce a plurality of temporarily decompressed frame images by decompressing the received compressed frame image groups, and d) extract the temporarily decompressed frame images indicated by the segment information received by the segment information reception unit.

8. A program distribution method used in a program distribution system for distributing, via a distribution network, a distribution program extracted from an original program, the program distribution system including an original program storage unit operable to store one original program, the original program including inter-frame compressed original frame images, inter-frame compression being a method whereby each frame image is compressed, with at least one frame image being compressed using as a reference one or more neighboring frame images,
the program distribution method comprising:
a reception step for receiving segment information indicating a segment of the original frame images;
a decompression step for decompressing sections of the compressed original frame images to generate intermediate frame images that include the frame images indicated by the segment information;
a re-compression step for a) extracting from the intermediate frame images the frame images indicated by the segment information, and b) generating re-compressed frame images by performing inter-frame compression on the extracted frame images; and
a distribution step for distributing, via a distribution network, the re-compressed frame images as the distribution program.

9. A program distribution computer program used in a program distribution system for distributing, via a distribution network, a distribution program extracted from an original program, the program distribution system including an original program storage unit operable to store one original program, the original program including inter-frame compressed original frame images, inter-frame compression being a method whereby each frame image is compressed, with at least one frame image being compressed using as a reference one or more neighboring frame images,
the program distribution computer program comprising:
a reception step for receiving segment information indicating a segment of the original frame images;
a decompression step for decompressing sections of the compressed original frame images to generate intermediate frame images that include the frame images indicated by the segment information;
a re-compression step for a) extracting from the intermediate frame images the frame images indicated by the segment information, and b) generating re-compressed frame images by performing inter-frame compression on the extracted frame images; and
a distribution step for distributing, via a distribution network, the re-compressed frame images as the distribution program.

10. A computer-readable recording medium having stored thereon a program distribution computer program used in a program distribution system for distributing, via a distribution network, a distribution program extracted from an original program, the program distribution system including an original program storage unit operable to store one original program, the original program including inter-frame compressed original frame images, inter-frame compression being a method whereby each frame image is compressed, with at least one frame image being compressed using as a reference one or more neighboring frame images,
the program distribution computer program comprising:
a reception step for receiving segment information indicating a segment of the original frame images;
a decompression step for decompressing sections of the compressed original frame images to generate intermediate frame images that include the frame images indicated by the segment information;
a re-compression step for a) extracting from the intermediate frame images the frame images indicated by the segment information, and b) generating re-compressed frame images by performing inter-frame compression on the extracted frame images; and
a distribution step for distributing, via a distribution network, the re-compressed frame images as the distribution program.

11. A program distribution server apparatus that together with a program storage apparatus and a reproduction apparatus composes a program distribution system that extracts a distribution program from an original program and distributes the extracted distribution program via a distribution network, the program storage apparatus and the program distribution server apparatus being connected, and the program distribution server apparatus being connected to the reproduction terminal apparatus via a network,
the program storage apparatus comprising:
an original program storage unit operable to store one original program, the original program including inter-frame compressed original frame images, inter-frame compression being a method whereby each frame image is compressed, with at least one frame image being compressed using as a reference one or more neighboring frame images,
the program server apparatus comprising:
a reception unit operable to receive segment information indicating a segment of the original frame images;
a decompression unit operable to decompress sections of the compressed original frame images to generate intermediate frame images that include the frame images indicated by the segment information;
a re-compression unit operable to a) extract from the intermediate frame images the frame images indicated by the segment information, and b) generate re-compressed frame images by performing inter-frame compression on the extracted frame images; and
a distribution unit operable to distribute, via a distribution network, the re-compressed frame images as the distribution program, and
the reproduction terminal apparatus comprising:
a receiving unit operable to receive the distributed re-compressed frame images; and
a reproduction unit operable to reproduce the received re-compressed frame images.

12. A reproduction terminal apparatus that together with a program storage apparatus and a reproduction apparatus composes a program distribution system that extracts a distribution program from an original program and distributes the extracted distribution program via a distribution network, the program storage apparatus and the program distribution server apparatus being connected, and the program distribution server apparatus being connected to the reproduction terminal apparatus via a network,
the program storage apparatus comprising:
an original program storage unit operable to store one original program, the original program including inter-frame compressed original frame images, inter-frame compression being a method whereby each frame image is compressed, with at least one frame image being compressed using as a reference one or more neighboring frame images,
the program server apparatus comprising:
a reception unit operable to receive segment information indicating a segment of the original frame images;
a decompression unit operable to decompress sections of the compressed original frame images to generate intermediate frame images that include the frame images indicated by the segment information;
a re-compression unit operable to a) extract from the intermediate frame images the frame images indicated by the segment information, and b) generate re-compressed frame images by performing inter-frame compression on the extracted frame images; and
a distribution unit operable to distribute, via a distribution network, the re-compressed frame images as the distribution program, and
the reproduction terminal apparatus comprising:
a receiving unit operable to receive the distributed re-compressed frame images; and
a reproduction unit operable to reproduce the received re-compressed frame images.
